# EUROPEAN PATENT APPLICATION

(11) **EP 4 005 903 A1**
(43) Date of publication of application: **01.06.2022**
(21) Application number: 20210684.5
(22) Date of filing: 30.11.2020
(51) Int. Cl.: B62H 5/10, B62K 19/34, B62M 3/00

(54) **BICYCLE LOCK CAP**

(71) Applicant: PENTALOCK APS, 9000 Aalborg (DK)
(72) Inventor: NORUP, Emil, 9000 Aalborg (DK); JESSEN, Thomas Martin, 9000 Aalborg (DK); FISCHER, Mathias Herseth, 9020 Randers NV (DK); NAFEI, Nadiim, DK 2100 Copenhagen Ø (DK); MORTENSEN, Jesper, 9000 Aalborg (DK)
(74) Representative: AWA Denmark A/S

(57) **Abstract**

A bottom bracket (1) for a bicycle comprising a bottom bracket shell (11, 1) for forming part of a frame (4) of the bicycle. An interior surface (15) of the bottom bracket shell (11, 1) comprises an interior thread (14), wherein a first end cap (2) is engaged with the bottom bracket (1) via press fitting and a first extension portion (20) of the first end cap (2) is engaged with the interior (14) thread.

## Description

### Field of the invention

The present invention relates to a bottom bracket for a bicycle. The invention further relates to a method for removing a first end cap from a bicycle comprising a bottom bracket according to the invention.

### Background of the invention

Bicycle theft is a common problem in many places around the world. To prevent bicycle theft, most bicycles have a lock mounted thereon or have a separate lock. Traditional locking systems for bicycles work by fixating the bicycle to a fixed object, such as a street light, and/or by blocking a wheel of the bicycle, most commonly by means of a chain, wire, or U-Iock.

Such locking systems suffer from several drawbacks. Most crucially is that they are almost always locked/unlocked using a key and are all easy to tamper with as they are arranged externally on the bicycle. It is thus possible for a thief to break open the locking system, either by using tools to destroy the lock itself or by forcefully operating the key mechanism. Furthermore, separate locks require the cyclist to carry around the lock when not used or mount it on a separate mounting bracket on the bicycle.

WO 2019/179587 A1, by the applicant, discloses a bicycle locking system for mounting in a bicycle comprising an axle which is rotatable around its longitudinal axis, a first locking element and a second locking element, which are configured for locking engagement with each other, where the first locking element is fixed to the axle and each of the first and second locking elements comprise an engagement surface. The engagement surfaces of the locking elements comprise mutually corresponding protrusions and cavities, The locking system further comprises a biasing device and an actuation element, where the biasing device is configured to exert a force on the second locking element in the longitudinal direction, so as to displace the first and second locking elements in relation to each other, where the biasing device is a magnetic biasing device, and the actuation element acts to switch the locking system between a state where the biasing device magnetically repels the second locking element and a state where the biasing device magnetically attracts the second locking element.

Consequently, a convenient locking system incorporated into the bicycle is provided, thereby alleviating the bicycle user from carrying around a separate lock.

However, there is still room for improvement, as a bottom bracket of the bicycle and the devices contained within the bottom bracket, e.g. a locking system, may still be vulnerable to tampering.

On this background, it is an object to provide an improved bottom bracket for bicycles, which further hinders tampering of the bottom bracket, and consequently of a bicycle provided with such a bottom bracket.

### Summary of the invention

In a first aspect of the invention, the objects laid out in the background are achieved by a bottom bracket for a bicycle comprising:
a bottom bracket shell for forming part of a frame of the bicycle, wherein the bottom bracket shell defines a first opening for introducing an end cap along a longitudinal direction,
a first end cap introduced in the first opening, wherein the first end cap comprises a first exterior surface facing away from the bottom bracket shell, a first through-hole extending through the first exterior surface along a centre axis parallel to the longitudinal direction, and a first extension portion extending into the bottom bracket shell along the centre axis,
characterized in that, an interior surface of the bottom bracket shell comprises an interior thread, wherein the first end cap is engaged with the bottom bracket via press fitting and the first extension portion is engaged with the interior thread.

Consequently, a bottom bracket is provided which hinder tampering. Having the first end cap engaged via press fitting and engaged with an interior thread gives a strong connection, which cannot easily be broken without the use of specialized tools. The engagement between the interior thread and the extension portion may allow for the first end cap to be unscrewed from the bottom bracket shell. This is especially advantageous as the first end cap is press fitted into the bottom bracket shell, thereby making it difficult to pull the first end cap out of the bottom bracket shell. Another advantage of being able to unscrew the first end cap from the bottom bracket shell, is that it is not necessary to have access to the interior of the bottom bracket shell for unscrewing the first end cap, instead the first end cap may be unscrewed from the exterior via the interior thread.

The interior thread may be manufactured from a material harder than the first end cap. The interior thread may be configured to form a mating thread in the first extension portion when said first extension portion is unscrewed along the interior thread. Consequently, it may be visible on the end cap if the bottom bracket has been tampered with. The interior thread may be configured to form a thread in the first end cap when the first end cap is removed from the bottom bracket shell.

Preferably, the first end cap is manufactured from a resilient material facilitating press fitting of the first end cap.

Furthermore, having the first end cap manufactured from a resilient material may facilitate that when the first end cap has been introduced into the bottom bracket shell and is settling, the interior thread may dig into the exterior of the first extension portion, thus strengthening the engagement between the interior thread and the first extension portion e.g. the exterior of the first extension portion. The interior thread digging into the first end cap may create a barbed engagement between the interior thread and the first end cap.

In the context of this invention the use of the word bicycle is to be interpreted broadly. A bicycle may also be interpreted as a unicycle, a cycle with three wheels, four wheels, or more.

In an embodiment, a width of the first extension portion exceeds a width of the first opening.

Consequently, a strong press fit connection is obtained between the bottom bracket shell and the first end cap.

In an embodiment, the first exterior surface comprises markings indicating locations for forming holes for use in removing the first end cap from the bottom bracket shell.

Consequently, a clear indication is given for where holes are to be placed to remove the first end cap. The holes may provide space for a removal tool to engage with the first end cap. Rotation of the removal tool after engagement with the first end cap may then facilitate removal of the first end cap. The markings may also give an indication whether the bottom bracket has been tampered with, e.g. if the markings are not present it may indicate the bottom bracket has been tampered with.

The markings may be provided as indentations in the first exterior surface. The markings may be provided as protrusions in the first exterior surface. The markings may be formed as circles, squares, crosses, triangles or any other geometric shape. The first exterior surface may be provided with two, three, four or more markings. Preferably, the amount of markings on the first exterior surface corresponds to the removal tool, e.g. if the removal tool has four protrusions for engagement with holes in the first exterior surface, the first exterior surface may be provided with four markings.

In an embodiment the interior thread is an inclined thread, preferably with an inclination to the centre axis between 0-10 degrees, even more preferred between 2-5 degrees, and may a diameter of the interior thread may increase along the longitudinal direction.

Having an inclined thread may further facilitate a strong press fit engagement between the first end cap and the interior thread. Furthermore, inclining the interior thread may facilitate a barb behaviour of the interior thread, wherein the thread allows press fitting of the first end cap along the longitudinal direction and acts as barb when trying to pull out the first end cap in a direction opposite the longitudinal direction. The barbed behaviour of the thread may facilitate the creation of thread in the first extension portion when unscrewing the first extension portion.

In an embodiment the first extension portion comprises a first bearing portion configured for housing a bearing facilitating rotation of an axle around the centre axis.

Consequently, a space efficient and convenient solution for arranging a bearing within the bottom bracket is provided.

In an embodiment the bottom bracket further comprises a bearing, wherein the bearing is arranged in the first bearing portion and configured to facilitate rotation of an axle around the centre axis.

In an embodiment the first bearing portion comprises sealing portions and preformed holes arranged opposite the markings, and wherein the preformed holes and markings are separated by the sealing portions.

Consequently, the forming of holes for removing the first end cap is eased. With the predrilled holes there is only a need for removing the sealing portion to create holes for removing the first end cap. Furthermore, the preformed holes may further assure the holes formed for removal of the first end cap are correctly located on the exterior surface.

The predrilled holes may be formed as cylindrical holes extending longitudinally along the centre axis.

The sealing portions may be formed as part of the first exterior surface and/or the first bearing portion.

In an embodiment a width of the first bearing portion, perpendicular to the centre axis, increases along the longitudinal direction.

Consequently, a strong press fit connection may be obtained. This is especially the case in embodiments comprising an inclined interior thread. The increasing width of the first bearing portion may engage with an inclined thread to further improve a barbed effect provided by the interior thread. Furthermore, the increasing width of the first bearing portion may ensure a uniform engagement with an inclined thread, such that not only a bottom or top part of the first bearing portion is engaged with the inclined thread. Having an increasing width is also advantageous when the first bearing portion is manufactured from a resilient material and the interior thread is an inclined thread. Consequently, the wider bottom of the first bearing portion may elastically compress when initially introduced through the first opening and then gradually increase as the first bearing portion is further introduced into the bottom bracket shell.

The increase in width of the first bearing portion may be achieved by having an outer surface of the first bearing portion extending with an inclination away from the centre axis. Consequently, a width of the first bearing portion perpendicular to the centre axis LA increases along the longitudinal direction. The inclination between the centre axis and the outer surface of the first bearing portion may be between 0-5 degrees, preferably between 0-3 degrees, whereby a width of the first bearing portion increases along the longitudinal direction. If the interior thread is an inclined thread, the inclination of the outer surface of the first bearing portion may exceed the inclination of the interior thread.

In an embodiment the first extension portion comprises a first guiding portion extending along the centre axis, wherein the first guiding portion is formed as one or more legs extending into the bottom bracket shell, and wherein one or more ends of the one or more legs extending into bottom bracket shell comprises one or more guiding surfaces extending with an angle to the centre axis, and wherein the one or more guiding surfaces are configured to assist in introducing the first end cap through the first opening by guiding the extension portion along the interior thread in the longitudinal direction.

Consequently, press fitting of the first end cap is eased as the guiding surfaces assists in introducing the first end cap.

The first guiding portion may be provided with one, two, three, four, five, six, seven or more legs. Preferably, the legs are resilient legs configured to elastically deform.

The angle of the one or more legs may be complementary with an angle of the flanks of the interior thread. Consequently, allowing the guiding surfaces to assist in introducing the first end cap through the first opening along the interior thread. The guiding surfaces may travel along the flanks of the interior thread leading to a compression of the one or more legs. When the guiding surfaces passes the crests of the interior thread the legs may expand again. Thereby, achieving a spring-like behaviour of the legs as they travel along the interior thread, which may form a snap-fit assembly where the legs and the crests of the interior thread interlocks with each other..

The one or more legs may be biased away from the centre axis and towards the interior thread as the first end cap is introduced into the bottom bracket shell. Preferably, the one or more legs are biased away from the centre axis and towards the interior thread when the first end cap is introduced into the bottom bracket shell. The bias away from the centre axis may further facilitate a strong press-fit connection and the spring-like behaviour of the legs. The bias may be achieved by, a width between the legs exceeding a width defined by the interior thread of the bottom bracket shell. Consequently, the legs are in a constant state of compression towards each other during and after being introduced into the bottom bracket shell. The compression of the legs leads to the legs being biased towards the interior thread.

The one or more legs may be evenly distributed along a perimeter of the first end cap.

In an embodiment a width of the first guiding portion perpendicular to the centre axis increases along the longitudinal direction.

Consequently, a strong press fit connection may be obtained. This is especially the case in embodiments comprising an inclined interior thread. The increasing width of the first guiding portion may cooperate with an inclined thread to further improve a barbed effect provided by the interior thread. Furthermore, the increasing width of the first guiding portion may provide a uniform engagement with an inclined thread, so not only a bottom or top part of the first guiding portion is engaged with the inclined thread. Having an increasing width is also advantageous when the first guiding portion is provided as resilient legs. Consequently, the legs of the first guiding portion may elastically compress when initially introduced through the first opening and then gradually increase as the first guiding portion is further introduced into the bottom bracket shell.

The increase in width of the first guiding portion may be achieved by having the legs extending from a perimeter of first end cap with an inclination away from centre axis. Consequently, a width of the first guiding portion perpendicular to the centre axis LA increases along the centre axis LA. The inclination between the centre axis and the outer surface of the first bearing portion may be between 0-10 degrees, preferably between 0-5 degrees. If the interior thread is an inclined thread, the inclination of the legs of the first guiding portion may exceed the inclination of the interior thread.

In an embodiment the first guiding portion extends from the first bearing portion, and wherein the first bearing portion extends from the first exterior surface.

Consequently, the first guiding portion may ease press fitting of the first end cap, while the bearing portion provides a convenient housing for a bearing. The guiding portion may extend from the first bearing portion with a first angle. The first bearing portion may extend from the first exterior surface with a second angle. The first angle and the second angle may be the same angle or be different angles.

In an embodiment the bottom bracket further comprises a locking system arranged in the bottom bracket shell, wherein the locking system is modifiable between a locked state and an unlocked state, wherein in the locked state the locking system is configured to prevent an axle from rotating around the centre axis and in the unlocked state the axle is rotatable around the centre axis, said axle extending along the centre axis through the first through-hole and the bottom bracket shell, said axle being rotatable around the centre axis, and wherein the locking system is fixed in the first extension portion.

Consequently, a tamper proof locking system is provided, as access to the locking system is obstructed by the first end cap.

In a second aspect of the invention, the objects laid out in the background are achieved by a bicycle comprising a bottom bracket according to a first aspect of the invention.

In a third aspect of the invention, the objects laid out in the background are achieved by a method for removing a first end cap from a bottom bracket shell, the method comprising the steps of:
providing a bicycle comprising a bottom bracket according to the first aspect of the invention.
providing a removal tool configured for removing the first end cap from the bicycle,
forming holes in the first exterior surface,
inserting the removal tool into the holes, and
rotating the removal tool to disengage the first extension portion from the interior thread.

It is noted that the invention relates to all possible combinations of features recited in the claims. Other objectives, features, and advantages of the present inventive concept will appear from the following detailed disclosure, from the attached claims as well as from the drawings. A feature described in relation to one of the aspects may also be incorporated in the other aspect, and the advantage of the feature is applicable to all aspects in which it is incorporated.

### Brief description of the drawings

The invention will be described in more detail below by means of non-limiting examples of embodiments and with reference to the schematic drawing, in which:
Fig. 1 shows a schematic perspective view of an embodiment of the bottom bracket of the invention;
Fig. 2 shows a schematic perspective cut-away view of an embodiment of the bottom bracket of the invention;
Fig. 3a shows a schematic perspective view of a first end cap according to an embodiment of the invention;
Fig. 3b shows a schematic front view of the first end cap shown in Fig. 3a;
Fig. 3c shows a schematic bottom view of the first end cap shown in Fig. 3a;
Fig. 3d shows a schematic cross-sectional view of the first end cap shown in Fig. 3a;
Fig. 4 shows a schematic cross-sectional view of a bottom bracket shell according to an embodiment of the invention;
Fig. 5a a schematic perspective cut-away view of an embodiment of a bottom bracket of the invention in a disassembled state;
Fig. 5b a schematic perspective cut-away view of an embodiment of the bottom bracket of Fig. 5a in an assembled state.
Fig. 6a, 6b and 6c depicting different stages of removing a first end cap from a bottom bracket according to the invention.

### Detailed description

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided for thoroughness and com pleteness.

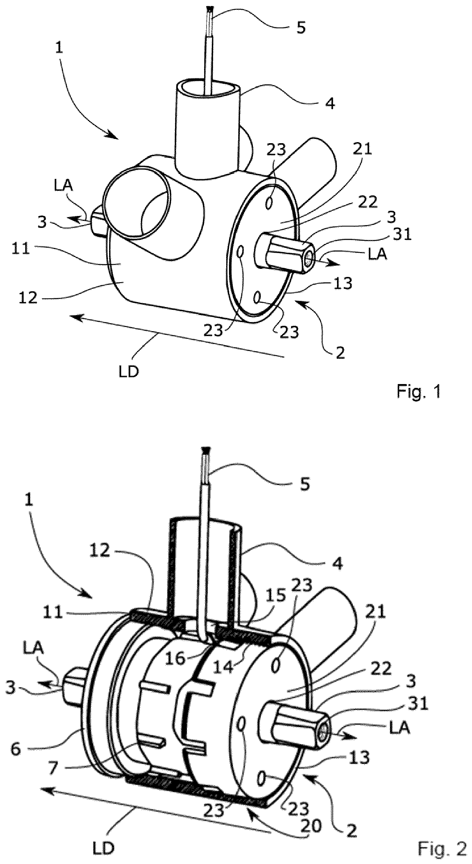

Referring initially to Fig. 1 depicting a schematic perspective view of an embodiment of the bottom bracket 1 of the invention. The bottom bracket 1 comprises a bottom bracket shell 11. The bottom bracket shell 11 may be manufactured from aluminium, steel, or other metals or alloys. The bottom bracket shell 11 forms part of a frame 4 of a bicycle. The bottom bracket shell 11 is in the shown embodiment formed as a hollow cylinder. The bottom bracket shell 11 extends axially along a centre axis LA. In the shown embodiment the centre axis LA corresponds to the centre axis LA of the hollow cylinder. The bottom bracket shell 11 comprises an exterior surface 12 facing away from the rest of the bottom bracket 1.

A first end cap 2 is introduced into the bottom bracket shell 11. The first end cap 2 is configured to be introduced into the bottom bracket shell 11 along a longitudinal direction LD. The first end cap 2 is introduced via a first opening 17 in the bottom bracket shell. The longitudinal direction LD in the shown embodiment is parallel with the centre axis LA. The first end cap 2 comprises a first exterior surface 21 facing away from the bottom bracket shell 11. The first exterior surface 21 substantially covers the first opening 17. The first exterior surface 21 comprises markings 23. The markings 23 may indicate locations of holes for use in removing the first end cap 2 from the bottom bracket shell 11. The utilization of the marking 23 will be described more in-depth in the following figures. In the shown embodiment the first end cap 2 is installed into the bottom bracket shell 11. The first end cap 2 further comprises a first through-hole 22 extending through the first exterior surface 21. The first through-hole 22 is formed as a circular hole, wherein a centre of the circular hole intersects with the centre axis LA. In the shown embodiment, the first exterior surface 21 in the installed condition with the bottom bracket shell 11 is substantially flush with a top surface 13 of the bottom bracket shell 11. The first end cap 2 being flush with the bottom bracket shell may assure no vantage point is given for gripping and subsequently pulling out the first end cap 2. The top surface 13 of the bottom bracket shell 11 corresponds to a top surface of the bottom bracket shell 11. The top surface 13 of the bottom bracket shell 11 faces away from an interior of the bottom bracket shell 11.

An axle 3 extends through the first end cap 2 and the bottom bracket shell 11. More specifically the axle 3 extends through the first through-hole 22 of the first end cap 2. Preferably, the first through hole 22 is configured to accommodate the axle 3 with little to no clearance between the first end cap 2 and the axle 3. The axle 3 extends along the centre axis LA. The axle 3 is rotatable around the centre axis LA. In the shown embodiment, the centre axis LA corresponds to a longitudinal axis of the axle 3. The longitudinal direction LD and the centre axis LA are in the shown embodiment parallel to each other. The axle 3 is provided with connection interfaces 31 for connecting pedals to the axle 3. The connection interfaces 31 is in the shown embodiment provided as threads 31.

Extending from the bottom bracket 1 and through the frame 4 of the bicycle is one or more wires 5. The one or more wires 5 may provide a mechanical or electrical connection. The wires 5 may mechanically or electrically connect a locking system 7 accommodated within the bottom bracket shell 11 to other devices on the bicycle.

Referring to Fig. 2 depicting a schematic perspective cut-away view of an embodiment of the bottom bracket 1 of the invention. Opposite the first end cap 2 in the bottom bracket shell 11 is a second end cap 6. The second end cap 6 is connected to the connected bottom bracket shell 11. The connection between the bottom bracket shell 11 and the second end cap 6 is preferably a permanent connection, e.g. the second end cap being welded or adhered to the bottom bracket shell 11. Alternatively, the second end cap 6 may be press-fitted into the bottom bracket shell 11 or the bottom bracket shell may be provided with a thread with which the second end cap 6 may engage with. In other embodiments the second end cap 6 is formed integrally with the bottom bracket shell 11. The second end cap 6 is also provided with a through-hole which may accommodate the axle extending through the first end cap 2 and the bottom bracket shell 11.

Arranged in the bottom bracket shell 11 is a locking system 7. The locking system 7 is accommodated in the bottom bracket shell 11 between the first end cap 2 and the second end cap 6. The locking system 7 is modifiable between a locked state and an unlocked state. In the locked state the axle 3 is prevented from rotating around the centre axis LA and in the unlocked state the axle 3 is rotatable around the centre axis LA. The locking system 7 may be connected to the one or more wires 5. The one or more wires may then facilitate either an electrical and/or mechanical connection between the locking system 7 and one or more devices external to the bottom bracket shell 11. A more in-depth description of a locking system is given in WO 2019/179587 A1.

The bottom bracket shell 11 is provided with a frame opening 15. The frame opening 15 allows the one or more wires 5 to extend from an interior of the bottom bracket shell 11 into the frame 4 of the bicycle.

An interior surface 15 of the bottom bracket shell 11 is provided with an interior thread 14. The first end cap 2 is press fitted into the bottom bracket shell 11 and in engagement with the interior thread 14. The first end cap comprises a first extension portion 20. When the first end cap 2 has been press fitted into the bottom bracket shell 11, the first extension portion 20 extends into the bottom bracket shell 11 along the centre axis LA. The first extension portion 20 extends transversely from the first exterior surface 21. The first extension portion 20 is engaged with the interior thread 14. During press fitting of the first end cap 2 the first extension portion 20 is configured to cooperate with the interior thread 14. The first extension portion 20 preferably extends from the first exterior surface 21 to define an outer circumferential surface configured to engage the interior thread 14.

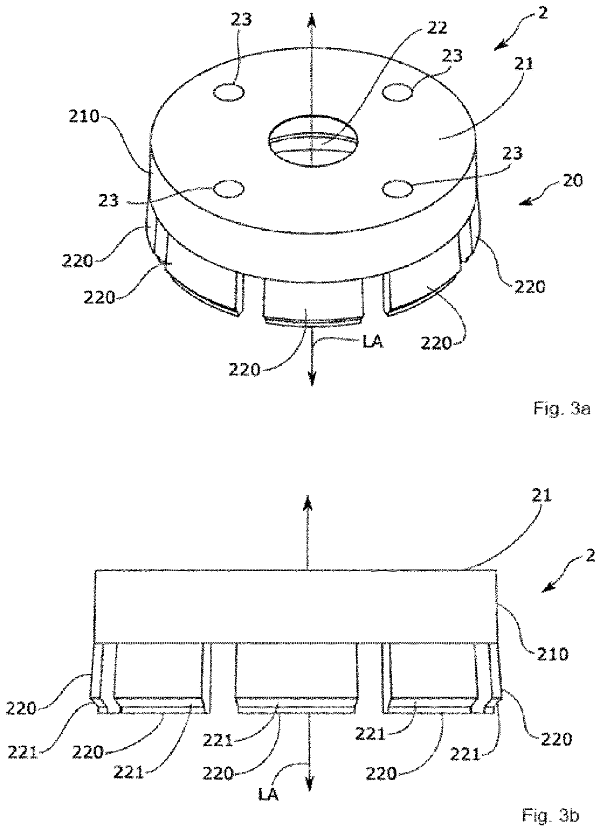

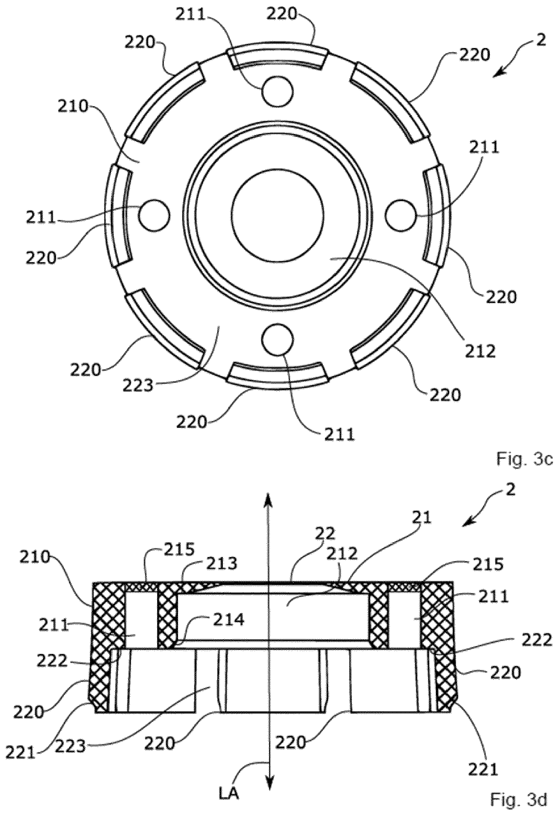

Referring now to figs 3a, 3b, 3c, and 3d depicting a schematic perspective view and a schematic front view, a schematic bottom view, and a schematic cross-sectional view, respectively, of a first end cap 2 according to an embodiment of the invention. The first end cap 2 comprises a first exterior surface 21. The first exterior surface 21 has a substantially circular outer perimeter. The first exterior surface 21 comprises markings 23 indicating locations of drill holes for use in removing the first end cap 2 from the bottom bracket shell 11. In the shown embodiment the first exterior surface 21 is provided with four markings 23. The four marking 23 are provided as four circular patterns on the first exterior surface 21. A first through-going hole 22 extends through the first exterior surface 21. The first through-going hole 22 is formed as a substantially circular hole 22 extending along the centre axis LA. The first through-going hole 22 provides a passage for an axle 3 between an interior of the bottom bracket shell 11 and an exterior of the bottom bracket shell 11. The first through-going hole 22 extends through a centre of the first exterior surface 21. Extending from the first exterior surface 21 is a first extension portion 20. The first extension portion 20 is configured for extending into the bottom bracket shell 11. The first extension portion 20 extends along the centre axis LA. The first end cap 2 may be manufactured from a polymer, e.g. an Acrylonitrile butadiene styrene (ABS) polymer.

The first extension portion 20 comprises a first bearing portion 210. The first bearing portion 210 extends from the first exterior surface 21 along the centre axis LA. The first bearing portion 210 is configured for housing a bearing facilitating rotation of the axle 3 around the centre axis LA. The bearing portion may be provided with a bearing chamber 212 configured to house a bearing. The bearing chamber 212 is in the shown embodiment formed as a substantially cylindrical chamber. The bearing chamber 212 is delimited at the top by the first exterior surface 21 and open at a bottom of the bearing chamber to receive a bearing to be accommodated within the bearing chamber 212. In the shown embodiment the bearing chamber 212 extends from the through-going hole 22 along the centre axis LA. The bearing chamber 212 increases in diameter as it extends away from the first through-going hole 212. Preferably, the increase in diameter corresponds to a bearing to be accommodated within the bearing chamber 212. Consequently, an axle 3 may extend through the first through-going hole 22 and the bearing chamber 212 while rotation of the axle 3 is facilitated by a bearing arranged within the bearing chamber 212. The bearing portion 210 forms a bearing shoulder 213 configured to abut with a bearing arranged in the bearing chamber 212. The bearing shoulder 213 is formed as a surface 213 extending perpendicular to the centre axis LA. The bearing shoulder 213 forms a natural stop for a bearing arranged in the bearing chamber 212. The bearing portion 210 comprises a tapered bearing surface 214. The tapered bearing surface 214 being arranged opposite of the bearing shoulder 213 in regard to the bearing chamber 212, e.g. the bearing shoulder 213 may define an upper surface of the bearing chamber 212 closer to the exterior surface 21, while the tapered bearing surface may define a lower surface of the bearing chamber 212 farther away from the first exterior surface 21. The tapered bearing surface 214 tapers outwards from the bearing chamber 212. The tapered bearing surface 214 facilitates press fitting of a bearing into the bearing chamber 212. The tapered bearing surface 213 acts as a guiding surface guiding a bearing being press fitted into the bearing chamber 212. The first bearing portion further comprises sealing portions 215. The sealing portions 215 separates preformed holes 211 in the first bearing portion 210 from the markings 23 on the first exterior surface 21. The preformed holes 211 are arranged opposite the markings 23 and separated by the sealing portions 215. An outer bearing surface of the first bearing portion 210 tapers outwardly from the first exterior surface 21. Therefore, a width of the first bearing portion 210 increases away from the first exterior surface 21. Consequently, a width of the first bearing portion 210 perpendicular to the centre axis LA increases along the centre axis LA. The taper from the first exterior surface 21 is between 0-5 degrees, preferably between 0-3 degrees. Alternatively, it may be formulated as the taper between first bearing portion and the centre axis is between 0-5 degrees, preferably between 0-3 degrees. An outer surface of the first bearing portion 210 is substantially smooth. The outer surface of the first bearing portion 210 preferably fully or at least partly defines an outer circumferential surface configured to engage the interior thread 14.

In the shown embodiment the first extension portion 20 further comprises a first guiding portion 220. The first guiding portion 220 extends from the first bearing portion 210 along the centre axis. The first guiding portion is formed as a plurality of legs 220 extending from the first bearing portion 210. The legs 220 extends from a perimeter of the first bearing portion 210. In the shown embodiment the first guiding portion 220 is formed as seven legs extending from a perimeter of the first bearing portion 210. The legs 220 are evenly distributed along the perimeter of the first bearing portion 210. The legs 220 are tapered outwardly so a width of the first guiding portion 210 perpendicular to the centre axis LA increases along the legs. Consequently, a width of the first guiding portion 220 perpendicular to the centre axis LA increases away from the first bearing portion 210. The taper between the first guiding portion and the centre axis is between 0-10, even more preferred between 2-5 degrees. The legs 220 are resilient, thus allowing for elastic deformation. The legs 220 are provided with one or more guiding surfaces 221. The guiding surfaces 221 are provided at ends of the legs 220 opposite the first bearing portion 210. The guiding surfaces 221 are provided as inwardly tapering surfaces. The guiding surfaces 221 tapers towards a centre of first guiding portion 220. The guiding surfaces 221 are configured to assist in introducing the first end cap 2 into the bottom bracket shell 11 along the first longitudinal direction LD. More specifically the guiding surfaces 221 may cooperate with an interior thread 14 of the bottom bracket shell 11. The legs 220 extends from the first bearing portion 210 to form a locking shoulder 222 with the first bearing portion 210. The locking shoulder 222 is configured to abut a locking system 7 arranged in the bottom bracket shell 11. Consequently, the locking shoulder 222 may acts as a stop for a locking system 7 arranged in the bottom bracket shell 11. The locking shoulder 222 may then limit movement of the locking system 7 along the centre axis LA. The locking shoulder 222 is formed as a surface extending perpendicularly to the centre axis LA. The legs 220 extends in parallel with the centre axis LA so as to form a locking space 223 in-between the legs 220. The locking space 223 being configured for receiving a locking system 7 with little to no clearance. Consequently, limiting movement of the locking system in a direction perpendicular to the centre axis LA. Thus, the legs 220 may together with the locking shoulder 222 limit movement of a locking system 7 in the bottom bracket shell 11 in two dimensions. Consequently, a locking system 7 in the bottom bracket shell 11 may be fixed in the first extension portion 20 of the first end cap 2. An outer surface of the first guiding portion 220 is substantially smooth.

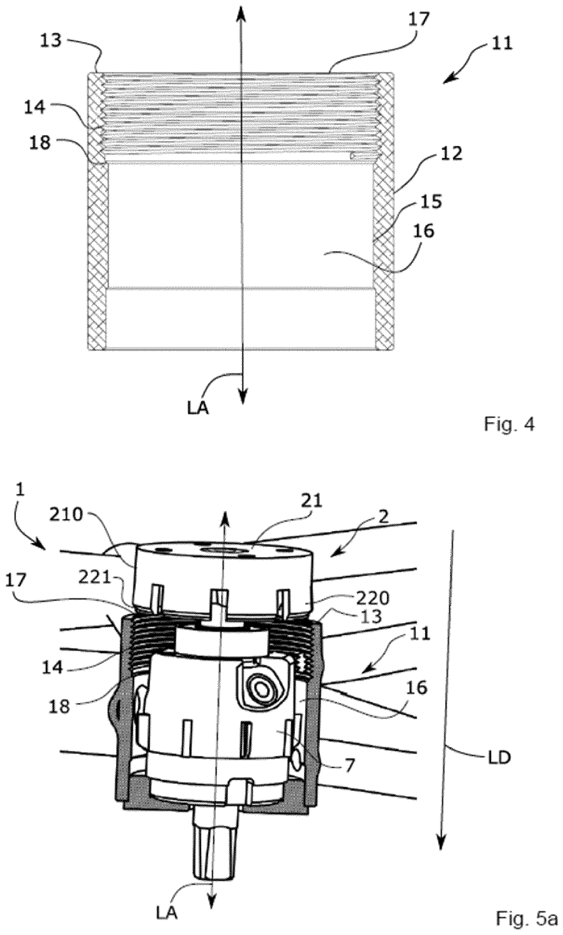

Referring now to fig. 4 depicting a schematic cross-sectional view of a bottom bracket shell 11 according to an embodiment of the invention. The bottom bracket shell 11 is formed substantially as a hollow cylinder. An exterior surface 12 of the bottom bracket shell 11 faces away from the bottom bracket shell 11. An interior surface 15 of the bottom bracket shell 11 faces towards an interior of the bottom bracket shell 11. The interior surface 15 delimits an interior space 16 of the bottom bracket shell 11. The interior space 16 being configured for receiving a locking system 7, a first end cap 2, and an axle 3. At least part of the interior surface 15 is provided as an interior thread 14. The interior thread 14 is configured to engage a first extension portion 20 of the first end cap 2. The interior thread 14 extends along a centre axis from a top surface 13 of the bottom bracket shell 11 and into the bottom bracket shell 11. At the top surface 13 is bottom bracket shell 11 defines a first opening 17 in which a first cap 2 may be introduced. The interior thread 14 is a tapered thread, preferably with a taper between 0-10 degrees, even more preferred between 2-5 degrees. A diameter of the interior thread 14 increases along the centre axis away from the top surface 13. At the end of the interior thread 14 opposite the top surface 13 is cap shoulder 18. The cap shoulder 18 is provided as a narrowing of the interior space 16. The cap shoulder 18 is an inwardly tapered surface on which a first cap 2 introduced through the first opening 17 may abut. Consequently, the cap shoulder 18 may limit movement of the first cap 2 along the centre axis LA, when the first end cap 2 has been introduced through the first opening 17.

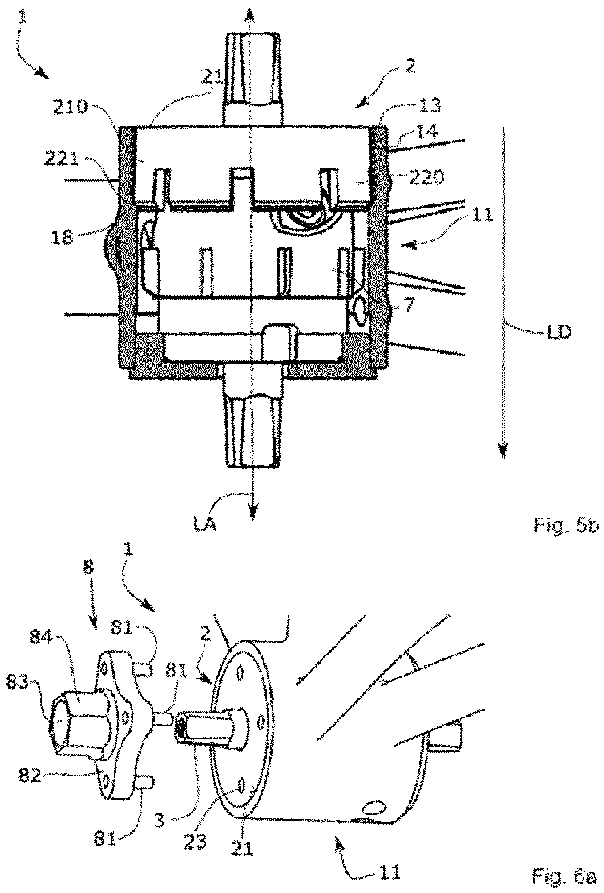

Referring now to figs 5a and 5b depicting a schematic perspective cut-away view of an embodiment of the bottom bracket 1 of the invention in a disassembled state and assembled state, respectively. In the disassembled state the first end cap 2 is ready to be introduced into the interior space 16 of the bottom bracket shell 11. The first end cap 2 is introduced via the first opening 17 of the bottom bracket shell 11. The first end cap 2 is introduced along the longitudinal direction LD. The first end cap 2 is introduced via press fitting. When the first end cap 2 is introduced, the guiding portion 220 of the first end cap 2 assists in introducing the first end cap 2 into the bottom bracket shell 11. The guiding surfaces 221 are configured to slide of the flanks of the interior thread 14. In particular the flanks of the interior thread 14 facing opposite of the longitudinal direction LD. As the first end cap 2 is being press fitted into the bottom bracket shell 1, the guiding surfaces 221 slides of the flanks of the interior thread 14. The sliding motion by the guiding surfaces 221 leads to the legs 220 defining the guiding portion 220 being compressed towards the centre axis LA. When the guiding surfaces 221 passes the crest associated with a flank the compressed legs 220 may move towards their uncompressed position again. The process may repeat itself until the guiding portion 220 of the first end cap 2 reaches the bottom of the interior thread 14. Preferably, the guiding surfaces 221 are tapered inwardly toward the centre axis LA with an angle configured to facilitate a sliding motion on a flank of the interior thread 14. In the assembled state the first exterior surface 21 of the first end cap 2 is substantially flush with the top surface 13 of the bottom bracket shell 11. Both the bearing portion 210 and the guiding portion 220 are in engagement with the interior thread 14. The guiding surface 221 abuts the cap shoulder 18, thus delimiting further movement of the first end cap 2 along the longitudinal direction LD. Preferably, the cap shoulder 18 is inclined with an angle corresponding to a taper of the guiding surfaces 221. Furthermore, a locking system 7 arranged in the bottom bracket shell 11 is in the assembled condition enclosed by the legs 220 of the guiding portion 220.

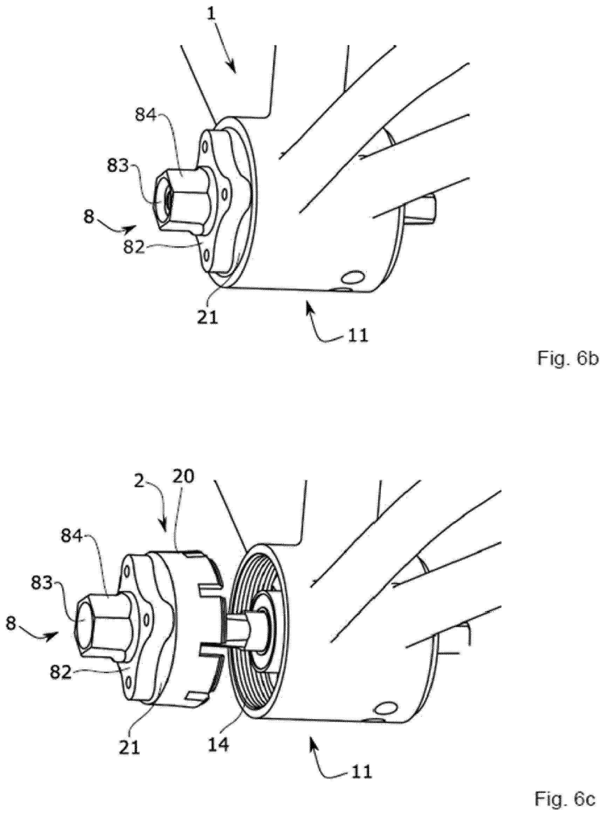

Referring now to figs 6a, 6b and 6c depicting different stages of removing a first end cap 2 from a bottom bracket 1 according to the invention. In a first step a removal tool 8 configured for removing the first end cap 2 from the bottom bracket 1 is provided. The removal tool 8 is provided with several protrusions 81. The protrusions 81 are configured to engage one or more drill holes created in the first end cap 2. The protrusions 81 extends from a support 82. Preferably, the protrusions 81 extends perpendicular to the support 82. The support 82 preferably, presents a planar surface on which the protrusions 81 extends perpendicularly from. An axle through-going hole 83 is formed in a centre of the support 82. The axle through-going hole 83 being configured for accommodating an axle when the support 82 abuts the first exterior surface 21 of the first end cap 2. The axle through-going hole 83 being configured for accommodating an axle when the protrusions 81 are in engagement with drill holes formed in the first end cap 2. An adapter 84 extends from the support 82 opposite the protrusions 81. The adapter 84 is configured for providing one or more engagement surfaces for an additional tool to engage with. The additional tool may be a wrench, a socket wrench, pliers, etc. In a next step one or more holes are drilled into the first exterior surface 21. The markings 23 on the first exterior surface 21 may indicate locations for where holes in the first exterior surface 21 are to be formed. These markings 23 may assure the holes are formed in the correct positions to allow the protrusions 81 of the removal tool 8 to engage with the holes. Further, preformed holes 211 in the bearing portion 210 of the first end cap 2 may ease the formed holes in the first exterior surface 21, as only a sealing portion 215 needs to be removed to create suitable holes for the tool 8. Preferably, the preformed holes 211 are created to receive the protrusions 81 of the removal tool 8. In a third step the removal tool 8 is inserted into the one or more holes formed into the first end cap 2. The removal tool 8 is inserted by having the protrusions 81 of the tool go into engagement with the one or more holes formed in the first exterior surface 21. The engagement between the protrusions 81 and the one or more the one or more holes formed in the first exterior surface 21 is obtained by inserting the protrusions 81 in the formed holes. In a fourth step the removal tool 8 is rotated to disengage the first extension portion 20 from the interior 14 thread. The removal tool 8 may be rotated via an additional tool in engagement with the adapter 84. Rotation of the removal tool 8 in return rotates the first end cap 2 and the first extension portion 20 of the first end cap 2. The interior thread 14 guides the rotation of the first extension portion 20. The interior thread 14 guides the rotation of the first extension portion 20 by forming a thread in the first extension portion 20. As the first extension portion 20 is rotated, the engagement between the interior thread 14 and the first extension portion 20 allows for the first extension portion to travel along the interior thread 14, which results in the first extension portion 20 and the first end cap 2 disengaging from the bottom bracket shell 11.

## Claims

1. A bottom bracket for a bicycle comprising:
a bottom bracket shell for forming part of a frame of the bicycle, wherein the bottom bracket shell defines a first opening for introducing an end cap along a longitudinal direction,
a first end cap introduced in the first opening, wherein the first end cap comprises a first exterior surface facing away from the bottom bracket shell, a first through-hole extending through the first exterior surface along a centre axis parallel to the longitudinal direction, and a first extension portion extending into the bottom bracket shell along the centre axis,
**characterized in that**, an interior surface of the bottom bracket shell comprises an interior thread, wherein the first end cap is engaged with the bottom bracket via press fitting and the first extension portion is engaged with the interior thread.

2. A bottom bracket according to claim 1, wherein the first exterior surface comprises markings indicating locations for forming holes for use in removing the first end cap from the bottom bracket shell.

3. A bottom bracket according to any one of the proceeding claims, wherein the interior thread is an inclined thread, preferably with an inclination to the centre axis between 0-10 degrees, even more preferred between 2-5 degrees, whereby a diameter of the interior thread increases along the longitudinal direction.

4. A bottom bracket according to any one of the proceeding claims, wherein the first extension portion comprises a first bearing portion configured for housing a bearing facilitating rotation of an axle around the centre axis.

5. A bottom bracket according to claim 4, further comprising a bearing, wherein the bearing is arranged in the first bearing portion and configured to facilitate rotation of an axle around the centre axis.

6. A bottom bracket according to claim 2, and 4 or 5, wherein the first bearing portion comprises sealing portions and preformed holes arranged opposite the markings, and wherein the preformed holes and markings are separated by the sealing portions.

7. A bottom bracket according to claims 4, 5, or 6, wherein a width of the first bearing portion perpendicular to the centre axis increases along the longitudinal direction.

8. A bottom bracket according to any one of the preceding claims, wherein the first extension portion comprises a first guiding portion extending along the centre axis, wherein the first guiding portion is formed as one or more legs extending into the bottom bracket shell, and wherein one or more ends of the one or more legs extending into bottom bracket shell comprises one or more guiding surfaces extending with an angle to the centre axis, and wherein the one or more guiding surfaces are configured to assist in introducing the first end cap through the first opening by guiding the extension portion along the interior thread in the longitudinal direction.

9. A bottom bracket according to claim 8, wherein a width of the first guiding portion perpendicular to the centre axis increases along the longitudinal direction.

10. A bottom bracket according to claim 7 or 8 and any of claims 4-6, wherein the first guiding portion extends from the first bearing portion, and wherein the first bearing portion extends from the first exterior surface.

11. A bottom bracket according any one of the preceding claims, wherein the bottom bracket further comprises a locking system arranged in the bottom bracket shell, wherein the locking system is modifiable between a locked state and an unlocked state, wherein in the locked state the locking system is configured to prevent an axle from rotating around the centre axis and in the unlocked state the axle is rotatable around the centre axis, said axle extending along the centre axis through the first through-hole and the bottom bracket shell, said axle being rotatable around the centre axis, and wherein the locking system is fixed in the first extension portion.

12. A bicycle comprising a bottom bracket according any of the preceding claims.

13. A method for removing a first end cap from a bottom bracket shell, the method comprising the steps of:
providing a bottom bracket according to any of the claims 1-11,
providing a removal tool configured for removing the first end cap from the bicycle,
forming holes in the first exterior surface,
inserting the removal tool into the holes, and
rotating the removal tool to disengage the first extension portion from the interior thread.
